# EUROPÄISCHE PATENTSCHRIFT

(11) **EP 0 383 071 B1**
(45) Veröffentlichungstag und Bekanntmachung des Hinweises auf die Patenterteilung: **13.10.1993**
(21) Anmeldenummer: 90101442.3
(22) Anmeldetag: 25.01.1990
(51) Int. Cl.: A01C 17/00

(54) **Grossflächendüngerstreuer**
Large area manure broadcaster
Epandeur centrifuge à grande largeur de travail

(30) Priorität: 11.02.1989 DE 8901590 U
(43) Veröffentlichungstag der Anmeldung: 22.08.1990
(73) Patentinhaber: Amazonen-Werke H. Dreyer GmbH & Co. KG, D-49205 Hasbergen (DE)
(72) Erfinder: Dreyer, Heinz, Dr. Dipl.-Ing., D-4507 Hasbergen (DE); Rostalski, Fritz, D-2870 Delmenhorst (DE)
(74) Vertreter: Schuster, Thomas, Dipl.-Phys.

(56) Entgegenhaltungen:
- EP-A- 0 292 874
- DE-A- 1 801 173
- DE-A- 3 438 711
- FR-A- 1 048 278
- US-A- 2 296 909
- US-A- 2 798 726
- US-A- 3 401 889

## Beschreibung

Die Erfindung betrifft einen Dungerstreuer gemäß des Oberbegriffs des Schutzanspruchs 1.

Ein derartiger Düngerstreuer wird üblicherweise als Großflächendüngerstreuer bezeichnet und ist beispielsweise durch die europäische Patentanmeldung 02 92 874 bekannt. Dieser Großflächendüngerstreuer weist einen langgestrecken Vorratsbehälter und ein in dem unteren Bereich des Vorratsbehälters angeordnetes Förderorgan auf, welches als umlaufendes Band ausgebildet ist und die sich im Vorratsbehälter befindlichen Düngemittel zu einem an dem hinteren Ende des Vorratsbehälters angeordneten Zentrifugalstreuwerk fördert. Dieses Zentrifugalstreuwerk weist zwei rotierend angetriebene Schleuderscheiben auf. Die Düngerdosierung zu den Schleuderscheiben erfolgt bei diesem Großflächendüngerstreuer durch einen einstellbaren Schieber auf der Ruckseite des Vorratsbehälters, der einen entsprechenden Schlitz Oberhalb des Förderbandes freigibt. Durch diesen einstellbaren Schlitz werden von dem Förderband die Düngemittel zu dem Zentrifugalstreuwerk gefördert. Das von dem Förderband in Verbindung mit dem Schieber dosierte Material wird durch zwei hinter und unterhalb des Ablaufendes des Förderbandes angeordnete Zulaufrutschen den beiden Schleuderscheiben zugeleitet. Die Zulaufrutschen bestimmen den Aufgabepunkt des Düngers auf den Schleuderscheiben. Das hat zur Folge, daß mit bekannten Großflächendügerstreuer bisher keine guten Streuergebnisse, zumindest im Vergleich zu einem Anbauschleuderdüngerstreuer, zu erreichen waren.

Aus der FR-A-10 48 278 ist ebenfalls ein gattungsgemäßer Düngerstreuer bekannt, dem die genannten Nachteile anhaften.

Der Erfindung liegt die Aufgabe zugrunde, mit Großflächendüngerstreuern eine den Anbaudüngerstreuer gleich gute oder zumindest annähernd gleich gute Verteilgenauigkeit zu erreichen.

Diese Aufgabe wird erfindungsgemäß durch die Maßnahmen gemäß des Kennzeichens des Anspruchs 1 gelöst.

Durch die Maßnahme, die Dosierung unterhalb des Zulauftrichters bzw. der Zulaufrutschen vorzunehmen, ergibt sich die Möglichkeit einer wesentlich exakteren Dosierung, als dies mit herkömmlichen, oberhalb der Rutschen angeordneten Schiebern der Fall ist. Zum anderen eröffnet die Ausbildung der Dosiereinheit die Möglichkeit, die Vorteile und die in aufwendiger Kleinarbeit erarbeiteten Parameter eines in großen Stückzahlen hergestellten an sich bekannten (z.B. aus EP-A2-175 388) Zentrifugalstreuwerks mit den Dosierorganen eines Zentrifugalanbaudüngerstreuers an einem Großflächendüngerstreuer einzusetzen. Es ist erstmalig, die in aufwendiger und kosten- sowie zeitintensiver Weise erstellten Streutabellen für viele Düngersorten und viele Einstellungen und Arbeitsbreiten ohne zusätzlichen Kostenaufwand bei vollem Erhalt der Präzision eines Anbauschleuderstreuers mit einem präzisen Streuwerk unmittelar für einen Großflächenstreuer auszunützen. Es können also somit auf einfachste Weise die jeweils auf dem Markt befindlichen "Herzstücke" der Streuwerke mit den zugehörigen Dosierorganen ohne zusätzliche Entwicklungs- und Weiterentwicklungskosten an einen Großflächendüngerstreuer herkömmlicher Bauart angebaut und angepaßt werden. Es werden damit sämtliche Vorteile, die ein Zentrifugalstreuwerk eines in großen Stückzahlen und serienmäßig hergestellten Anbauschleuderstreuers aufweist, auf einen Großflächendüngerstreuer übertragen.

Bisher sind Maßnahmen, bei Großflächenstreuern die Exaktheit des Streubildes zu erhöhen, im wesentlichen gescheitert.

Eine optimale Zudosierung, auch bei feuchten und schwer auszustreuendem Dünger wird dadurch gewährleistet, daß oberhalb der Auslauföffnung der Bodenplatten eine Rühreinrichtung angeordnet ist. In bevorzugter Weise weist die Rühreinrichtung zwei spiralförmige Rundstäbe auf. Hierdurch ergibt sich eine schonende, aber doch ausreichende Rührwirkung.

Eine sehr gute Rühreinrichtung ergibt sich dadurch, daß die Rühreinrichtung eine horizontale, sich quer zur Fahrtrichtung angeordnete Rührwelle aufweist, auf welcher die Rührorgane angeordnet sind.

Weiterhin ist erfindungsgemäß vorgesehen, daß das Förderorgan als umlaufendes Gummiband ausgebildet ist, welches auf der Förderseite vorzugsweise glatt ist. Infolge dieser Maßnahme wird die Voraussetzung geschaffen, ohne daß aufwendige Abstimmungsmaßnammen zwischen Förderorgan und der auszubringenden Menge über das Dosierorgan entfallen können. Denn das Gummiband, falls der Trichter oberhalb der Bodenplatte gefüllt ist, fördert dann einfach unter dem Düngervorrat weg, ohne daß noch weiterhin in nachteiliger Weise Dünger in den Zulauftrichter gefördert wird, wobei andererseits bei sich leerendem Zulauftrichter automatisch dann wieder Dünger in den Zulauftrichter gefördert wird. In bevorzugter Weise sollte dennoch an der Rückwand des Vorratsbehdälters ein einstellbarer Großmengenregler, beispielsweise ein Schieber angeordnet sein.

Ein einfacher Antrieb der Rühreinrichtung kann dadurch erreicht werden, daß der Antrieb mit dem Antrieb der Schleuderscheiben gekoppelt ist.

Damit das Förderband keinen Dünger über den Zulauftrichter wegfördert, ist erfindungsgemäß vorgesehen, daß die hintere Wand des Zulauftrichters sich bis oberhalb des Förderbandes erstreckt, wobei das Rührorgan dann von oben mit einem Wand- oder Deckenteil automatisch abgedeckt ist. Somit wird das nach Obenführen der Rückwand des Zuführtrichters bis oberhalb des Förderorgans ein geschlossener Raum geschaffen.

In bevorzugter Weise sind selbstverständlich die Schleuderscheiben auf ihren Antriebswellen mittels eines Schnellverschlusses leicht lösbar befestigt und gegen andere Schleuderscheiben, wie Breitstreu- und Grenzstreuscheiben etc. austauschbar. Hierdurch wird sichergestellt, daß sämtliche Vorteile eines Großserienstreuers, -streuwerks auch bei dem erfindungsgemäßen Großflächendüngerstreuer Verwendung finden können. Auch können die Wurfschaufeln auf den Schleuderscheiben in Scheibenebene winkelverschwenkbar angeordnet sein, sowie die Wurfschaufeln mit unterschiedlichen zur Winkelradialen mittels in Bereich der Wurfschaufeln angeordneter Skalen einstellbar sein, wie dieses bei Großseriendüngerstreuern bereits bekannt ist.

Desweiteren ist erfindungsgemäß vorgesehen, daß die Zulauftrichter oder -rutschen als Dosiereinheit ausgebildet sind, und mit der aus zwei Schleuderscheiben bestehenden Verteileinheit eine Baueinheit bilden. Infolge dieser Maßnahmen ist es leicht möglich, das erfindungsgemäße Streuwerk von dem Großflächendüngerstreuer abzunehmen und gegen ein Schneckenstreuwerk mit sich quer zur Fahrtrichtung erstreckenden Streuschnecken auszutauschen.

Weitere Einzelheiten der Erfindung sind den übrigen Unteransprüchen und der Beispielsbeschreibung und den Zeichnungen zu entnehmen. Hierbei zeigt:

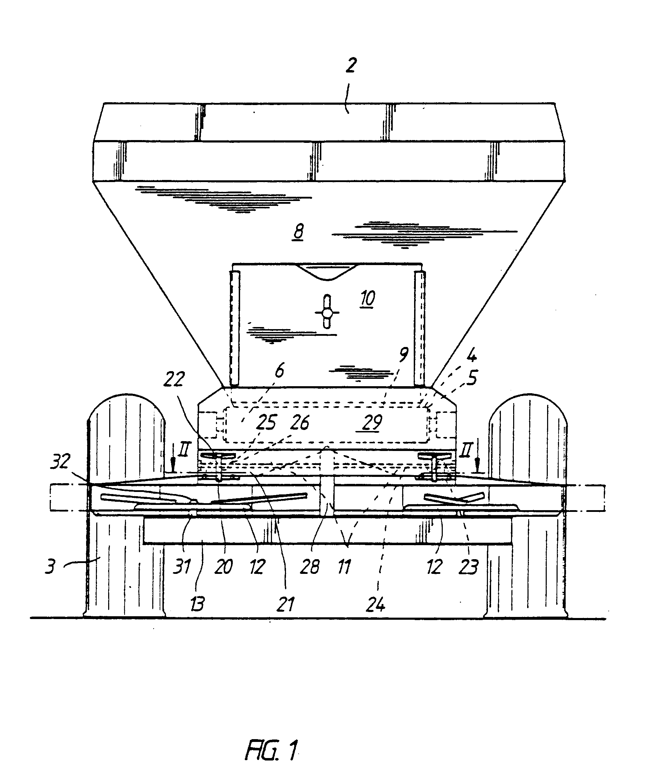

- Fig. 1: einen erfindungsgemäßen Großflächendüngerstreuer in der Ansicht von hinten,

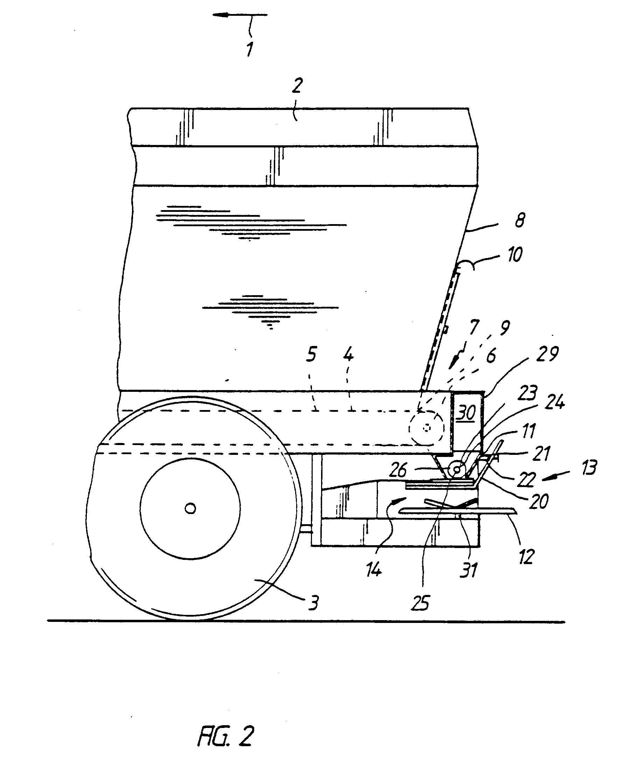

- Fig. 2: die erfindungsgemäße Dosiereinheit in der Seitenansicht und in Prinzipdarstellung,

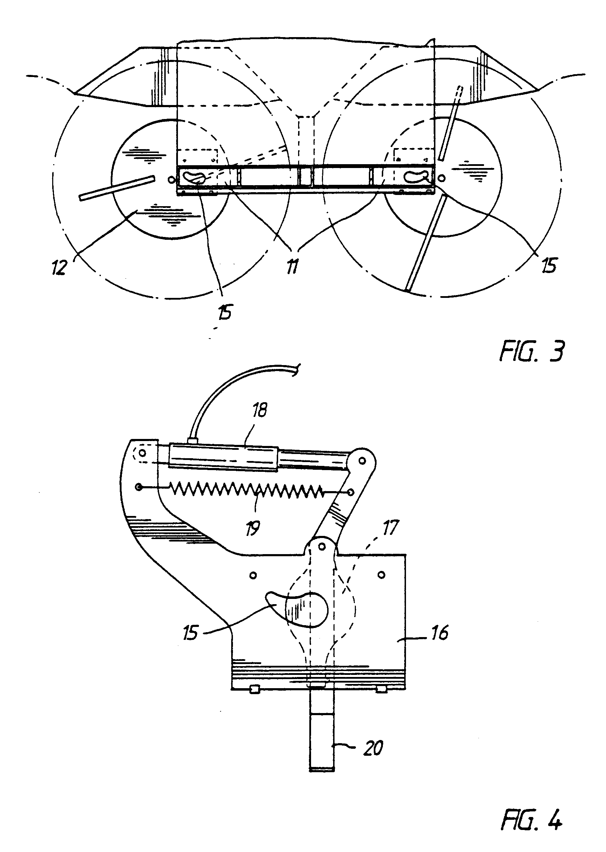

- Fig. 3: eine Ansicht entlang der Linie III-III der Fig. 2,
- Fig. 4: die erfindungsgemäße Bodenplatte mit Auslauföffnung und Schieber,
- Fig. 5: die Schleuderscheiben des erfindungsgemäßen Düngerstreuers und
- Fig. 6: ein Zentrifugalstreuwerk mit Grenzstreuscheibe auf der linken Seite eines erfindungsgemäßen Düngerstreuers.

Der Großflächendüngerstreuer weist den in Fahrtrichtung 1 langgestreckten Vorratsbehälter 2 mit dem darunter angeordneten Fahrwerk 3 auf. In dem unteren Bereich des Vorratsbehälters 2 befindet sich das Förderorgan 4, welches als umlaufendes Gummiband 5 ausgebildet ist und von einer vorderen, nicht näher dargestellten Umlenkrolle und der hinteren Umlenkrolle 6 gehalten wird. Die hintere Umlenkrolle 6 wird in bekannter und daher nicht näher dargestellter Weise angetrieben, so daß mit Hilfe des Gummibandes 5 die sich im Vorratsbehälter 3 befindlichen Düngemittel zum hinteren Ende 7 des Vorratsbehälters gefördert werden. In der Rückwand 8 des Vorratsbehälters 2 ist im unteren Bereich und oberhalb des Gummibandes 5 die Auslauföffnung 9 angeordnet, welche in ihrer Größe durch den einstellbaren Schieber 10 in ihrer Öffnungsweite einstellbar ist. Über den Schieber 10 findet eine grobe Ausbringmengenregelung statt. Am hinteren Ende des Gummibandes 5 sind hinter und unter diesem die Zulauftrichter bzw. Zulaufrutschen. 11 angeordnet. Unterhalb der Zulaufrutschen 11 befindet sich das aus den beiden Schleuderscheiben 12 bestehende Zentrifugaldstreuerwerk 13. Die Zulaufrutschen bzw. Zulauftrichter 11 befinden sich somit zwischen dem hinteren Ende des Vorratsbehälters 2 bzw. dem Gummiband 3 und dem Zentrifugalstreuwerk 13. Unterhalb der Zulauftrichter 11 bzw. Zulaufrutschen 11 sind jeweils eine diese nach unten abschließende Dosiereinheit 14 angeordnet, welche aus mit Auslauföffnungen 15 ausgestatteten Bodenplatten 16 besteht. Unterhalb der Bodenplatten 16 sind die Schieber 17 angeordnet, durch welche die in den Bodenplatten 16 angeordneten Auslauföffnungen 15 verschließbar und in ihrer Öffnungsweite einstellbar sind. Das aus Schieber 17, Bodenplatte 16 mit Auslauföffnung 15 bestehende Dosierorgan 14 ist das Dosierorgan 14 eines serienmäßigen und in großen Stückzahlen vertriebenen Zentrifugaldüngerstreuers. Die aus Schleuderscheiben 12, Bodenplatten 16 und Schieber 17 bestehende Dosier- und Verteileinheit 14 ist das Dosier-und Zentrifugalstreuwerk eines Großserienstreuers, für welchen Streutabellen etc. erstellt sind. Der Schieber 17 wird jeweils über den einfach wirkenden Hydraulikzylinder 18, der zwischen Schieber 17 und der Bodenplatte 16 angeordnet ist, betätigt. Durch das Ausfahren des Hydraulikzylinders 18 wird der Schieber 17 in Schließstellung gebracht, während er durch die entgegenwirkende Zugfeder 19 in Öffnungsstellung gebracht wird. Die Öffnungsstellung des Schiebers 17 und somit die Öffnungsweite der Auslauföffnung 15 wird durch den einstellbaren Anschlaghebel 20 der an dem an der Rückwand 21 des Zulauftrichters 11 angeordneten Einstellsegment mit Einstellsegment 22 und Einstellskala einzustellen ist.

Oberhalb der Auslauföffnungen 15 in den Bodenplatten 16 ist die Rühreinrichtung 23 angeordnet. Die Rühreinrichtung besteht aus der horizontalen und sich quer zur Fahrtrichtung 1 erstreckenden Rührwelle 24, auf der die Rührorgane 25 angeordnet sind, die aus zwei spiralförmigen Stäben 26 besteht.

Die in den Zulauftrichtern 11 angeordnete Rühreinrichtung 23 mit den Rührstäben 26 ist als von dem Förderorgan zu den Auslauföffnungen 15 düngerfördernde Rührspiralen oder ähnliches ausgebildet. Die Rührstäbe 26 befinden sich dicht und unmittelbar oberhalb der Auslauföffnung 15.

Die Bodenplatte 16 mit der Auslauföffnung 15 und mit dem Schieber 17 ist das die Ausbringmenge und den Aufgabepunkt des Düngers auf den Schleuderscheiben 12 bestimmende Dosierorgan. Somit befindet sich das Dosierorgan in bzw. an der Bodenplatte 16 des jeweiligen Zulauftrichters 11 unmittelbar oberhalb der Schleuderscheiben 12.

Die Rührwelle 24 der Rühreinrichtung 23 wird über den Antriebsstrang 27 von dem Antrieb 28 der Schleuderscheiben 12 angetrieben, so daß der Antrieb des Rührwerkes mit dem Antrieb der Schleuderscheiben 12 gekoppelt ist.

Des weiteren erstreckt sich die hintere Wand 29 des Zulauftrichters 11 bis oberhalb des als Gummiband 5 ausgebildeten Förderbandes. Somit ist das Rührorgan 25 von oben mit einem Wand- und Deckenteil 29 abgedeckt. Es ergibt sich also durch das Führen der Rückwand 29 des Zuführtrichters 11 bis oberhalb des Förderorgans 4 ein an sich geschlossener Raum 30.

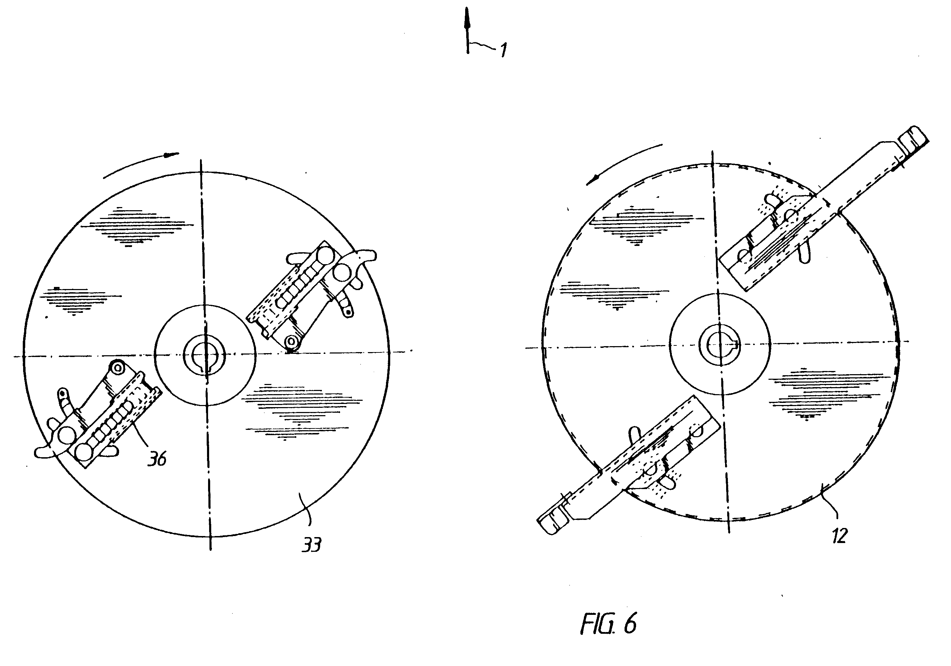

Die Schleuderscheiben 12 sind auf ihren Antriebswellen 31 mittels eines Schnellverschlusses 32 leicht lösbar befestigt und gegen andere Schleuderscheiben wie Breitstreuscheiben und Grenzstreuscheiben etc. austauschbar. So ist beispielsweise, wie Fig. 6 zeigt, auf der linken Schleuderscheibenwelle eine sog. Grenzstreuscheibe 33 angeordnet.

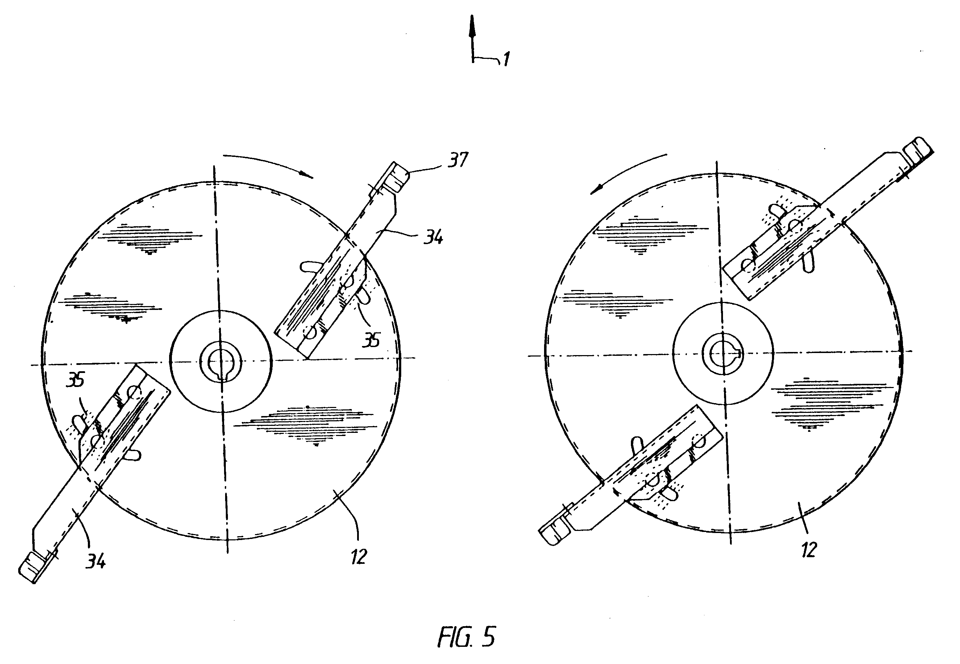

Die Schleuderscheiben gemäß Fig. 5 weisen Wurfschaufeln 35 4uf, die in Scheibenebene der Schleuderscheiben winkelverschwenkbar angeordnet sind und so mit unterschiedlichen Winkeln zur Radialen mittels der Skalen 35 einstellbar sind. Die Wurfschaufeln 34 weisen eine unterschiedliche Länge auf.

Die Grenzstreuscheibe 33 gemäß Fig. 6 (linke Scheibe) weist zwei Wurfschaufeln 36 auf, die mit unterschiedlichen zur radialen Mittelskalen einstellbar sind, sowie aus zwei in radialer Richtung zueinander verschiebbaren und somit in unterschiedlichen Längen einstellbaren Teilen besteht. Auch diese Wurfschaufeln 36 der Grenzscheibe können mit äußeren, in aufrechter Ebene verschwenkbaren Teilen 37, wie die Wurfschaufel 34 gemäß Fig. 5, ausgerüstet sein, so daß sich die Normal- und Spätdüngung durchführen läßt.

## Patentansprüche

1. Düngerstreuer mit einem langgestreckten Vorratsbehälter, einem eigenen Fahrwerk und einem in dem unteren Bereich des Vorratsbehälters angeordneten Förderorgan, welches die im Vorratsbehälter befindlichen Düngemittel zu einem an dem hinteren Ende des Vorratsbehälters angeordneten Zentrifugalstreuwerk mit zumindest zwei um aufrechte Achsen rotierend angetriebenen Streuscheiben mit Wurfschaufeln in einstellbaren Mengen fördert, von welchem die Düngemittel in Breitverteilung auf der Bodenoberfläche verteilt werden, wobei die Düngemittel über zwischen dem Förderorgan und den Schleuderscheiben angeordnete Zulauftrichter oder -rutschen den Schleuderscheiben zugeführt werden, **dadurch gekennzeichnet,** daß unterhalb der Zulauftrichter oder -rutschen (11) zumindest eine diese nach unten abschließende Dosiereinheit (14) angeordnet ist, die mit Auslauföffnungen (15) ausgestattete Bodenplatten (16) und unter den Bodenplatten (16) angeordnete Schieber (17) zum Einstellen der Öffungsweite umfaßt, und daß die hintere Wand (29) der(s) Zulauftrichter(s) (11) sich bis oberhalb des Förderbandes (4) erstreckt.

2. Düngerstreuer nach Anspruch 1, **dadurch gekennzeichnet,** daß oberhalb der Auslauföffnung (15) der Bodenplatten (16) eine Rühreinrichtung (23) angeordnet ist.

3. Düngerstreuer nach Anspruch 3, **dadurch gekennzeichnet,** daß die Rühreinrichtung (23) zwei spiralförmige Rundstäbe (26) aufweist.

4. Düngerstreuer nach Anspruch 3, **dadurch gekennzeichnet,** daß die Rühreinrichtung (23) eine horizontale, sich quer zur Fahrtrichtung (1) angeordnete Rührwelle (24) aufweist, auf welcher Rührorgane (25) angeordnet sind.

5. Düngerstreuer nach einem oder mehreren der vorstehenden Ansprüche, **dadurch gekennzeichnet,** daß das Förderorgan (4) als umlaufendes Gummiband (5) ausgebildet ist, welches auf der Förderseite vorzugsweise glatt ist.

6. Düngerstreuer nach einem oder mehreren der vorstehenden Ansprüche, **dadurch gekennzeichnet,** daß an der Rückwand (29) des Vorratsbehälters (2) ein einstellbarer Grobmengenregler, beispielsweise ein Schieber (10), angeordnet ist.

7. Düngerstreuer nach Anspruch 3 oder 4, **dadurch gekennzeichnet,** daß der Antrieb der Rühreinrichtung (23) mit dem Antrieb der Schleuderscheiben (12) gekoppelt ist.

8. Düngerstreuer nach Anspruch 4, **dadurch gekennzeichnet,** daß das Rührorgan (25) von oben mit einem Wand- oder Deckenteil (29) abgedeckt ist.

9. Düngerstreuer nach einem oder mehreren der vorstehenden Ansprüche**, dadurch gekennzeichnet,** daß durch das Nachobenführen der Rückwand (29) des Zuführtrichters (11) bis oberhalb des Förderorgans (4) ein geschlossener Raum (30) entsteht.

10. Düngerstreuer nach einem oder mehreren der vorstehenden Ansprüche, **dadurch gekennzeichnet,** daß die Schleuderscheiben (12) auf ihren Antriebswellen (31) mittels eines Schnellverschlusses (32) leicht lösbar befestigt sind und gegen andere Schleuderscheiben (12, 33) wie Breitstreuscheiben (12) und Grenzstreuscheiben (33) etc. angeordnet sind.

11. Düngerstreuer nach einem oder mehreren der vorstehenden Ansprüche, **dadurch gekennzeichnet,** daß auf jeder Schleuderscheibe (12, 33) zumindest zwei Wurfschaufeln (34, 36) unterschiedlicher Länge angeordnet sind.

12. Düngerstreuer nach einem oder mehreren der vorstehenden Ansprüche, **dadurch gekennzeichnet,** daß auf jeder Schleuderscheibe (12, 33) zumindest zwei Wurfschaufeln (34, 36) angeordnet sind, die mit unterschiedlichen Winkeln zur Radialen einstellbar sind, sowie aus zwei in radialer Richtung zueinander verschiebbaren und somit in unterschiedlichen Längen einstellbaren Teilen bestehen.

13. Düngerstreuer nach einem oder mehreren der vorstehenden Ansprüche, **dadurch gekennzeichnet,** daß die Zulauftrichter oder -rutschen (11) mit der Dosiereinheit (14) und mit der aus zwei Schleuderscheiben (12) bestehenden Verteileinheit eine Baueinheit bildet.

## Claims

1. Fertilizer distributor, including an elongate hopper, its own travelling means and a conveyor means, which is disposed in the lower region of the hopper and conveys the fertilizers, situated in the hopper, in adjustable quantities to a centrifugal distributing means, which is disposed at the rear end of the hopper and has at least two distribution discs, which are rotatably driven about vertical axles and have throwing vanes, the fertilizers being distributed by said centrifugal distributing means in a wide distribution over the ground surface, the fertilizers being supplied to the centrifugal discs via supply hoppers or chutes, disposed between the conveyor means and the centrifugal discs, characterized in that at least one metering unit (14) is disposed beneath the supply hoppers or chutes (11), said unit terminating the latter at their lower end and including base plates (16), which are provided with discharge apertures (15), and slide members (17), which are disposed beneath the base plates (16) to adjust the width of opening, and in that the rear wall (29) of the supply hopper(s) (11) extends above the conveyor belt (4).

2. Fertilizer distributor according to claim 1, characterized in that an agitator arrangement (23) is disposed above the discharge aperture (15) in the base plates (16).

3. Fertilizer distributor according to claim 2, characterized in that the agitator arrangement (23) has two helical round rods (26).

4. Fertilizer distributor according to claim 3, characterized in that the agitator arrangement (23) has a horizontal agitator shaft (24), which extends perpendicularly to the direction of travel (1) and has agitating means (25) disposed thereon.

5. Fertilizer distributor according to one or more of the preceding claims, characterized in that the conveyor means (4) is in the form of a circulatory rubber belt (5), which is preferably smooth on the conveying side.

6. Fertilizer distributor according to one or more of the preceding claims, characterized in that an adjustable coarse quantity regulator, preferably a slide member (10), is disposed on the rear wall (29) of the hopper (2).

7. Fertilizer distributor according to claim 3 or 4, characterized in that the drive means for the agitator arrangement (23) is connected to the drive means for the centrifigal discs (12).

8. Fertilizer distributor according to claim 4, characterized in that the agitating means (25) is covered from above by a wall or cover portion (29).

9. Fertilizer distributor according to one or more of the preceding claims, characterized in that a self-contained chamber (30) is formed by the subsequent upper extension of the rear wall (29) of the supply hopper (11) above the conveyor means (4).

10. Fertilizer distributor according to one or more of the preceding claims, characterized in that the centrifugal discs (12) are mounted on their drive shafts (31) by means of a quick-acting closure (32) so as to be easily detachable therefrom and are exchangeable for other centrifugal discs (12, 33), such as wide distribution discs (12) and limited distribution discs (33), etc.

11. Fertilizer distributor according to one or more of the preceding claims, characterized in that at least two throwing vanes (34, 36) of variable length are disposed on each centrifugal disc (12, 33).

12. Fertilizer distributor according to one or more of the preceding claims, characterized in that at least two throwing vanes (34, 36) are disposed on each centrifugal disc (12, 33) and are adjustable at variable angles relative to the radial, and said throwing vanes comprise two portions which are displaceable in a radial direction relative to each other and, in consequence, are adjustable in respect of variable lengths.

13. Fertilizer distributor according to one or more of the preceding claims, characterized in that the supply hoppers or chutes (11) form a structural unit with the metering unit (14) and with the distributing unit, which comprises two centrifugal discs (12).

## Revendications

1. Epandeur d'engrais comportant un réservoir d'alimentation allongé, un châssis et un organe de transfert dans la zone inférieure du réservoir d'alimentation, cet organe de transfert transportant l'engrais du réservoir d'alimentation jusqu'à un dispositif d'épandage centrifuge prévu à l'extrémité arrière du réservoir d'alimentation, ce dispositif comportant au moins deux disques d'épandage entraînés en rotation autour d'axes verticaux, ces disques comportant des pales d'éjection pour un transfert réglable, l'engrais étant réparti en largeur à la surface du sol, cet engrais étant alimenté par des trémies d'alimentation ou des goulottes prévues entre l'organe de transfert et les disques d'épandage pour arriver sur les disques d'épandage, épandeur caractérisé en ce qu'en-dessous de la trémie d'alimentation ou des goulottes (11) il y a au moins une unité de dosage (14) fermant cette trémie ou ces goulottes dans leur partie inférieure, cette unité de dosage étant munie de plaques de fond (16) avec des orifices de sortie (15) et des tiroirs (17) en-dessous des plaques de fond (16) pour régler le degré d'ouverture et en ce que la paroi arrière (29) de la trémie d'alimentation ou des goulottes d'alimentation (11) arrive jusqu' au-dessus de la bande transporteuse (4).

2. Epandeur d'engrais selon la revendication 1, caractérise en ce qu'au-dessus de l'orifice de sortie (15) des plaques de fond (16) il y a une installation d'agitation (23).

3. Epandeur d'engrais selon la revendication 3, caractérisé en ce que l'installation d'agitation (23) comporte deux tiges en spirale (26).

4. Epandeur d'engrais selon la revendication 3, caractérisé en ce que l'installation d'agitation (23) comporte un axe (24) s'étendant horizontalement transversalement à la direction de déplacement (1), cet axe portant des agitateurs (25).

5. Epandeur d'engrais selon l'une ou plusieurs des revendications précédentes, caractérisé en ce que l'organe de transfert (4) est une bande sans fin en caoutchouc (5) qui est de préférence lisse sur la face assurant le transfert.

6. Epandeur d'engrais selon l'une ou plusieurs des revendications précédentes, caractérisé en ce que la paroi arrière (29) du réservoir d'alimentation (2) comporte un organe de dosage grossier, réglable, par exemple un tiroir (10).

7. Epandeur d'engrais selon la revendication 3 ou 4, caractérisé en ce que l'entraînement de l'installation d'agitation (23) est couplé sur l'entraînement des disques d'épandage (12).

8. Epandeur d'engrais selon la revendication 4, caractérisé en ce que l'agitateur (25) est recouvert par une paroi ou une partie de couvercle (29).

9. Epandeur d'engrais selon une ou plusieurs des revendications précédentes, caractérisé en ce que le relevage de la paroi arrière (29) de la trémie d'alimentation (11) jusqu'au-dessus de l'organe de transfert (4) crée un volume fermé (30).

10. Epandeur d'engrais selon une ou plusieurs des revendications précédentes, caractérisé en ce que les disques d'épandage (12) sont fixés de manière facilement amovible sur les axes d'entraînement (31) à l'aide de moyens de liaison rapide (32) et peuvent être remplacés par d'autres disques d'épandage (12, 33) tels que des disques d'épandage larges (12) ou des disques d'épandage en limite de propriété (33).

11. Epandeur d'engrais selon une ou plusieurs des revendications précédentes, caractérisé en ce que chaque disque d'épandage (12, 33) comporte au moins deux pales d'éjection (34, 36) de longueur différente.

12. Epandeur d'engrais selon une ou plusieurs des revendications précédentes, caractérisé en ce que chaque disque d'épandage (12, 33) comporte au moins deux pales d'éjection (34, 36) réglables par rapport au rayon suivant des angles différentes et se composant de deux parties réglables, de longueur différente, et qui peuvent coulisser l'une par rapport à l'autre dans la direction radiale.

13. Epandeur d'engrais selon une ou plusieurs des revendications précédentes, caractérisé en ce que la trémie d'alimentation ou les goulottes (11) forment avec l'unité de dosage (14) et le dispositif distributeur comprenant les deux disques d'épandage (12) un ensemble constructif.
